# EUROPÄISCHE PATENTSCHRIFT

(11) **EP 1 710 553 B1**
(45) Veröffentlichungstag und Bekanntmachung des Hinweises auf die Patenterteilung: **19.10.2011**
(21) Anmeldenummer: 06005359.2
(22) Anmeldetag: 16.03.2006
(51) Int. Cl.: G01M 13/02

(54) **Vorrichtung und Verfahren zur Ermittlung von Betriebsgrössen einer Magnetkupplung**
Device and method for determining operating parameters of a magnetic clutch
Procédé et dispositif destinés à la détermination de grandeurs de fonctionnement d'un embrayage magnétique

(30) Priorität: 06.04.2005 DE 102005015742
(43) Veröffentlichungstag der Anmeldung: 11.10.2006
(73) Patentinhaber: Richter Chemie-Technik GmbH, D-47906 Kempen (DE)
(72) Erfinder: Fiedler, Jürgen, Dr.-Ing., 31848 Bad Münder (DE); Hellmich, Bernd, Dipl.-Phys., 30449 Hannover (DE); Plass, Normann, Dipl.-Phys., 30167 Hannover (DE); Bahm, Falk, Dr.-Ing., 47647 Kerken (DE)
(74) Vertreter: Cohausz Hannig Borkowski Wißgott

(56) Entgegenhaltungen:
- DE-A1- 3 605 899
- DE-T2- 60 100 118
- DE-T2- 69 103 665
- US-A1- 2004 027 116

## Beschreibung

Die Erfindung betrifft eine Vorrichtung zur Ermittlung von Betriebsgrößen einer Magnetkupplung, die eine drehbare Antriebseinheit mit ersten Magneten und eine drehbare Abtriebseinheit mit zweiten Magneten aufweist, wobei die Abtriebseinheit magnetisch an die Antriebseinheit gekoppelt ist, und wobei die Vorrichtung einen Sensor zur Messung eines Magnetfeldes oder dessen zeitlicher Ableitung aufweist, wobei der Sensor so positioniert ist, dass das aus der Überlagerung des Magnetfeldes der ersten Magneten der Antriebseinheit mit dem Magnetfeld der zweiten Magneten der Abtriebseinheit resultierende Magnetfeld oder dessen zeitliche Ableitung mittels des Sensors erfassbar ist, und dass eine Auswerteeinheit vorgesehen ist, mittels derer aus dem resultierenden Magnetfeld oder dessen zeitlicher Ableitung das übertragene Drehmoment ermittelbar ist.

Des Weiteren betrifft die Erfindung ein Verfahren zur Ermittlung des übertragenen Drehmomentes einer Magnetkupplung der vorgenannten Art.

Eine derartige Vorrichtung und ein derartiges Verfahren zur Blockierüberwachung einer Magnetkupplung ist aus der DE 36 05 899 A1 bekannt. Nachteilig ist dabei, dass lediglich eine Blockierüberwachung der Magnetkupplung erfolgt, es jedoch nicht möglich ist, das übertragene Drehmoment zu ermitteln. Aus der DE 691 03 665 T2 bekannt ist eine Messvorrichtung für das eine Welle beaufschlagende Drehmoment, welches zwei mehrpolige Magnete aufweist, die entlang zweier rechtwinkliger im axialen Abstand von der Welle laufender Querschnitte befestigt sind, sowie eine feststehende Fühleranordnung zwischen den beiden Magneten aufweist, die auf den Vorbeilauf der Magnete anspricht und die Ausgangssignale liefert zur Erzeugung eines Signals das proportional zum Drehmoment geformt worden ist.

Vorrichtungen und Verfahren der vorgenannten Art sind bekannt. Bei Magnetkupplungen stellt sich zwischen der Antriebseinheit mit ersten Magneten und der Abtriebseinheit mit zweiten Magneten ein Winkelversatz ein, der abhängig ist von dem an der Magnetkupplung übertragenen Drehmoment. Anhand dieses Winkelversatzes ist das an der Magnetkupplung übertragene Drehmoment bestimmbar. DE 601 00 118 T2 offenbart eine Vorrichtung der vorgenannten Art, bei der zwei Sensoren zur Erfassung der Magnetfelder angeordnet sind. Der erste Sensor erfasst das Magnetfeld der Antriebseinheit und der zweite Sensor erfasst das Magnetfeld der Abtriebseinheit. Anhand der Signale der beiden Sensoren wird eine Zeitdifferenz Δt ermittelt, aus der wiederum der sich eingestellte Winkelversatz und somit das zugehörige Drehmoment indirekt bestimmbar ist. Dabei soll ein Überschreiten des maximalen Winkelversatzes verhindert werden indem der abtriebsseitige Widerstand automatisch angepasst wird.

Nachteilig dabei ist, dass zur Ermittlung von Betriebsgrößen, insbesondere des übertragenen Drehmomentes, zwei Sensoren anzuordnen sind, aus deren Signalverläufen eine Zeitdifferenz abgeleitet wird, um das übertragene Drehmoment zu ermitteln. Dies erfordert durch die Anordnung zweier Sensoren einen hohen instrumentellen Aufwand. Desweiteren ist ein hoher Aufwand bei der Kalibrierung zu betreiben, da zwei Sensoren und somit zwei Messketten zu kalibrieren sind.

Die Aufgabe der Erfindung ist es, eine Vorrichtung und ein Verfahren zur Ermittlung von Betriebsgrößen einer Magnetkupplung der vorgenannten Art zu schaffen, die es bei minimiertem instrumentellen Aufwand gestattet, Betriebsgrößen der Magnetkupplung, insbesondere das an der Magnetkupplung übertragene Drehmoment, zuverlässig zu ermitteln.

Diese Aufgabe wird erfindungsgemäß gelöst durch eine Vorrichtung zur Ermittlung von Betriebsgrößen einer Magnetkupplung, die eine drehbare Antriebseinheit mit ersten Magneten und eine drehbare Abtriebseinheit mit zweiten Magneten aufweist, wobei die Abtriebseinheit magnetisch an die Antriebseinheit gekoppelt ist und wobei die Vorrichtung einen Sensor zur Messung eines Magnetfeldes oder dessen zeitlicher Ableitung aufweist, wobei der Sensor so positioniert ist, dass das aus der Überlagerung des Magnetfeldes der ersten Magneten der Antriebseinheit mit dem Magnetfeld der zweiten Magneten der Abtriebseinheit resultierende Magnetfeld oder dessen zeitlicher Ableitung mittels des Sensors erfassbar ist und dass eine Auswerteeinheit vorgesehen ist, mittels derer aus dem resultierenden Magnetfeld oder dessen zeitlicher Ableitung mindestens eine Betriebsgröße ermittelbar ist, die dadurch gekennzeichnet ist, dass mittels der Auswerteeinheit aus dem zeitlichen Verlauf des resultierenden Magnetfeldes oder dessen zeitlicher Ableitung, insbesondere von Zeitabschnitten festlegbarer Länge, die Amplitude und/oder relative Phasenlage zumindest einer Harmonischen des Verlaufs des resultierenden Magnetfeldes oder dessen zeitlicher Ableitung ermittelbar ist und mittels der Auswerteeinheit ein Vergleich der Amplitude und/oder relativer Phasenlage zumindest einer Harmonischen des resultierenden Magnetfeldes oder dessen zeitlicher Ableitung, insbesondere einer Harmonischen ungerader Ordnung, mit gespeicherten Werten durchführbar ist.

Die weitere Aufgabe der Erfindung wird gelöst durch ein Verfahren zur Ermittlung von Betriebsgrößen einer Magnetkupplung der vorgenannten Art, umfassend die folgenden Schritte:
- Messung des zeitlichen Verlaufs des aus der Überlagerung des Magnetfeldes der ersten Magneten der Antriebseinheit mit dem Magnetfeld der zweiten Magneten der Abtriebseinheit resultierenden Magnetfeldes oder dessen zeitlicher Ableitung mittels eines Sensors,
- Ermittlung mindestens einer Betriebsgröße aus dem gemessenen resultierenden Magnetfeld oder dessen zeitlicher Ableitung mittels einer Auswerteeinheit, wobei mittels der Auswerteeinheit aus dem zeitlichen Verlauf des resultierenden Magnetfeldes oder dessen zeitlicher Ableitung, insbesondere von Zeitabschnitten festlegbarer Länge, die Amplitude und/oder relative Phasenlage zumindest zweiter Harmonischer des resultierenden Magnetfeldes oder dessen zeitlicher Ableitung, insbesondere die Amplitude und/oder relative Phasenlage zweier Harmonischer ungerader Ordnung, ermittelt wird und mittels der Auswerteeinheit ein Vergleich der Amplitude und/oder relativer Phasenlage zumindest einer Harmonischen des resultierenden Magnetfeldes oder dessen zeitlicher Ableitung mit gespeicherten Werten durchgeführt wird, insbesondere einer Harmonischen ungerader Ordnung.

Dadurch dass nunmehr lediglich ein Sensor angeordnet ist, der so positioniert ist, dass das aus der Überlagerung des Magnetfeldes der ersten Magneten der Antriebseinheit mit dem Magnetfeld der zweiten Magneten der Abtriebseinheit resultierende Magnetfeld oder dessen zeitlicher Ableitung mittels des Sensors erfassbar ist, wird der instrumentelle Aufwand und der Aufwand für die Kalibrierung des Sensors und der Messkette gegenüber dem Stand der Technik deutlich reduziert, wodurch sich eine zuverlässige und preiswerte Lösung ergibt.

Weitere vorteilhafte Ausgestaltungen der erfindungsgemäßen Vorrichtung und des erfindungsgemäßen Verfahrens sind in den Unteransprüchen angegeben.

Vorzugsweise ist mittels der Auswerteeinheit aus dem resultierenden Magnetfeld oder dessen zeitlicher Ableitung das übertragene Drehmoment ermittelbar.

In Abhängigkeit des an der Magnetkupplung übertragenen Drehmomentes stellt sich ein Winkelversatz zwischen der Antriebseinheit mit ersten Magneten und der Abtriebseinheit mit zweiten Magneten ein. Dieser Winkelversatz führt zu einer Veränderung des resultierenden Magnetfeldes oder dessen zeitlicher Ableitung, welches aus der Überlagerung der Magnetfelder der ersten Magneten der Antriebseinheit mit den zweiten Magneten der Abtriebseinheit resultiert. Die Form des resultierenden Magnetfeldes oder dessen zeitlicher Ableitung, das heißt der zeitliche Verlauf, ist somit abhängig von dem Winkelversatz zwischen Antriebseinheit und Abtriebseinheit. Aus einer Analyse dieser Form des resultierenden Magnetfeldes oder dessen zeitlicher Ableitung ist es somit möglich, durch die erfindungsgemäße Vorrichtung und das erfindungsgemäße Verfahren Betriebsgrößen der Magnetkupplung zu ermitteln, insbesondere das an der Magnetkupplung übertragene Drehmoment zu ermitteln.

Die Erfindung nutzt dabei also den Umstand, dass das resultierende Magnetfeld oder dessen zeitliche Ableitung infolge eines Winkelversatzes zwischen Antriebseinheit und Abtriebseinheit seine Charakteristika bzw. seine Form ändert, und dass durch eine Analyse der Charakteristika bzw. der Form des resultierenden Magnetfeldes oder dessen zeitlicher Ableitung Betriebsgrößen der Magnetkupplung ermittelbar sind. Dabei ist es ausreichend, das resultierende Magnetfeld oder dessen zeitliche Ableitung mit lediglich einem geeigneten Sensor zu delektieren.

Im unbelasteten Zustand richten sich die Magnetpaare von Innen- und Außenring genau gegenüber an, sodass die gesamte Kupplung symmetrisch (gegenüber Vertauschen der Drehrichtung) ist. Das gemessene Zeitsignal des resultierenden Magnetfeldes oder dessen zeitlicher Ableitung ist somit symmetrisch gegenüber Vertauschung der Zeitrichtung; d. h. im Graphen ist es spiegelsymmetrisch gegenüber Spiegelung an der y-Achse.

Wird die Kupplung belastet, kommt es durch Verwindung von Innen- und Außenring zum Bruch der Symmetrie, was dazu führt, dass im Graphen des Magnetsignals die ansteigende Flanke verformt (nicht mehr symmetrisch) gegenüber der abfallenden Flanke ist.

In einer bevorzugten Ausführungsform unterzieht die Auswerteeinheit den zeitlichen Verlauf des resultierenden Magnetfeldes oder dessen zeitlicher Ableitung, insbesondere den zeitlichen Verlauf von Zeitabschnitten festlegbarer Länge des resultierenden Magnetfeldes oder dessen zeitlicher Ableitung, einer Fourier-Transformation, das heißt einer harmonischen Analyse. Die Fourier-Transformation kann vorteilhaft ausgeführt werden durch Anwendung des FFT Algorithmus (schnelle Fourier-Transformation). Bei der Fourier-Transformation wird vorzugsweise die Passierfrequenz der Nord-Süd-Pol-Magnetpaare als 1. Harmonische definiert.

Vorzugsweise ist mittels der Auswerteeinheit aus dem zeitlichen Verlauf des resultierenden Magnetfeldes oder dessen zeitlicher Ableitung, insbesondere von Zeitabschnitten festlegbarer Länge des resultierenden Magnetfeldes oder dessen zeitlicher Ableitung, die Amplitude und/oder relative Phasenlage zumindest einer Harmonischen des Verlaufs des resultierenden Magnetfeldes relativ zu einer anderen Harmonischen ermittelbar.

Es hat sich gezeigt, dass die Phasenlage bestimmter Harmonischer des Verlaufs des resultierenden Magnetfeldes abhängig ist von dem an der Magnetkupplung übertragenen Drehmoment. Somit kann aus dem Zusammenhang zwischen der Phasenlage zwischen Harmonischen direkt das übertragene Drehmoment ermittelt werden.

Bei der Belastung der Kupplung unter Drehmoment ändert sich auf Grund der Verwindung der Magnetringe gegeneinander die Form des zeitlichen Verlaufs des Magnetfeldes oder dessen zeitliche Ableitung. Tatsächlich ist die FFT nicht die einzige Möglichkeit, eine Formanalyse zu machen, so zeigen z. B. auch statische Kenngrößen eine Abhängigkeit vom Drehmoment.

Da es sich beim Zeitsignal jedoch um ein periodisches Signal handelt, bietet sich die FFT an. Jedes periodische Signal lässt sich anhand seiner Fourierkomponenten vollständig beschreiben, so dass die FFT eine umfassende Analyse bietet. Darüber hinaus hat die FFT weitere Vorteile: Rauschanteile des Signals, die nicht periodisch sind, können durch Mittelung der FFT über mehrere Perioden weitgehend unterdrückt werden. Letztendlich sind Kenngrößen, die mittels der FFT gebildet wurden, am robustesten unter verschiedenen äußeren Bedingungen.

Vorzugsweise ist mittels der Auswerteeinheit ein Vergleich der Amplitude und/oder der relativen Phasenlage zumindest zweier Harmonischer des resultierenden Magnetfeldes oder dessen zeitlicher Ableitung, insbesondere zweier Harmonischer ungerader Ordnung mit gespeicherten Werten, durchführbar. Anhand dieses Vergleiches mit gespeicherten Werten ist somit eine zuverlässige Betriebsüberwachung gewährleistet, da beispielsweise bei Überschreitung zulässiger Maximalwerte eine automatische Abschaltung erfolgen kann.

Bei dem Sensor kann es sich um einen Hallsensor oder eine Spule handeln. Mittels Sensoren dieser Art ist es möglich, ein Magnetfeld oder dessen zeitliche Ableitung zu messen.

In einer bevorzugten Ausführungsform ist eine Speichereinheit vorgesehen, mittels derer der zeitliche Verlauf des resultierenden Magnetfeldes oder dessen zeitliche Ableitung, insbesondere von Zeitabschnitten festlegbarer Länge des resultierenden Magnetfeldes oder dessen zeitliche Ableitung, zumindest temporär speicherbar ist. Eine solche Speichereinheit kann insbesondere zur dauerhaften Speicherung für eine Langzeitüberwachung vorgesehen sein.

Vorzugsweise entspricht die Anzahl der ersten Magneten der Antriebseinheit der Magnetkupplung der Anzahl der zweiten Magneten der Abtriebseinheit.

In einer bevorzugten Ausführungseinheit ist die Antriebseinheit der Magnetkupplung mit einem Motor, insbesondere einem Elektromotor, gekoppelt.

In einer bevorzugten Ausführungsform ist eine A/D-Wandlereinheit vorgesehen, mittels derer ein analoges Sensorsignal digitalisierbar ist, insbesondere mit einer festlegbaren Abtastrate digitalisierbar ist. Vorzugsweise ist eine Filtereinheit vorgesehen, mittels derer ein analoges und/oder ein digitalisiertes Sensorsignal filterbar ist, insbesondere tiefpassfilterbar, insbesondere mit einer festlegbaren Filtereckfrequenz.

Durch eine geeignete Festlegung der Parameter der Filtereinheit sowie der Abtastrate der Wandlereinheit ist somit eine geeignete Erfassung des Sensorsignals möglich, das heißt, dass die Abtastrate so gewählt sein kann, dass eine entsprechende Anzahl höherer Harmonischer der Grundfrequenz des resultierenden Magnetfeldes oder dessen zeitlicher Ableitung im Sensorsignal enthalten ist, wobei durch die entsprechende Parameterfestlegung der Filtereinheit das Abtasttheorem einhaltbar ist, wonach die Abtastrate mindestens doppelt so hoch sein muss wie die höchste im Signal enthaltene Frequenz.

Bevorzugt ist der Sensor zwischen der Antriebseinheit mit ersten Magneten und der Abtriebseinheit mit zweiten Magneten oder in oder an einem die Antriebseinheit umschließenden Gehäuse angeordnet. Durch die Positionierung des Sensors ist somit gewährleistet, dass der Sensor das aus der Überlagerung des Magnetfeldes der ersten Magneten der Antriebseinheit mit dem Magnetfeld der zweiten Magneten der Abtriebseinheit resultierende Magnetfeld oder dessen zeitliche Ableitung erfassen kann.

Bei der Durchführung der Fourier-Transformation wird diese vorzugsweise angewendet auf den zeitlichen Verlauf von Zeitabschnitten festlegbarer Länge des resultierenden Magnetfeldes oder dessen zeitlicher Ableitung, wobei die Zeitabschnitte vorzugsweise derart festgelegt sind, dass sie der Dauer einer Umdrehung der Antriebseinheit oder einem ganzzahligen Vielfachen der Dauer einer Umdrehung der Antriebseinheit entsprechen.

Bei einer alternativen Ausführungsform der Erfindung kann eine Filterbank vorgesehen sein, insbesondere eine Filterbank mehrerer Bandpassfilter, wobei die Bandpassfilter-Eckfrequenzen derart festgelegt sein können, dass die Durchlassbereiche der Filterbank auf einzelne festlegbare Harmonische abgestimmt sind, das heißt, diese Bereiche gerade nicht herauszufiltern.

Mit einer derartigen Filterbank ist es somit möglich, beispielsweise die Harmonische erster Ordnung mittels einer ersten Filtereinheit der Filterbank mit einem auf die Harmonische erster Ordnung abgestimmten Durchlassbereich zu erhalten sowie mit einer zweiten Filtereinheit der Filterbank mit einem entsprechend abgestimmten Durchlassbereich eine Harmonische höherer Ordnung, insbesondere eine Harmonische ungerader Ordnung, zu erhalten und mittels der Auswerteeinheit den Phasenversatz zwischen den beiden ausgewählten und mittels der Filterbank extrahierten Harmonischen zu ermitteln, wobei aus diesem Phasenversatz wiederum Betriebsgrößen der Magnetkupplung, insbesondere das an der Magnetkupplung übertragene Drehmoment ermittelbar ist.

Somit ist es möglich, das Eingangssignal des Sensors zur Erfassung des resultierenden Magnetfeldes oder dessen zeitlicher Ableitung in mehrere festlegbare Frequenzbänder zur weiteren Analyse zu unterteilen.

Ein Ausführungsbeispiel der Erfindung ist in den Figuren dargestellt und wird im Folgenden näher erläutert. Es zeigen:
- Fig. 1: einen Schnitt durch eine Pumpe mit einer Magnetkupplung,
- Fig. 2: einen Schnitt durch die Magnetkupplung im lastfreien Zustand,
- Fig. 3: einen Schnitt durch die Magnetkupplung im belasteten Zustand,
- Fig. 4: den Verlauf des resultierenden Magnetfeldes im lastfreien Zustand,
- Fig. 5: die Amplituden der Harmonischen des resultierenden Magnetfeldes nach Fig. 4,
- Fig. 6: den Verlauf des resultierenden Magnetfeldes im belasteten Zustand,
- Fig. 7: die Amplituden der Harmonischen des resultierenden Magnetfeldes im belasteten Zustand nach Fig. 6,
- Fig. 8: die Phasenlage der fünften Harmonischen des resultierenden Magnetfeldes in Abhängigkeit des übertragenen Drehmoments,
- Fig. 9: den Verlauf des resultierenden Magnetfeldes im lastfreien sowie im belasteten Zustand.

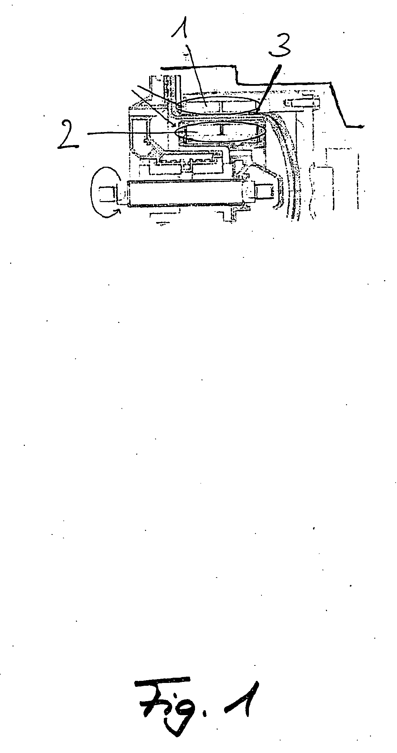

Fig. 1 zeigt einen teilweisen Schnitt durch eine Pumpe mit einer Magnetkupplung. Die Magnetkupplung hat eine drehbare Antriebseinheit mit ersten Magneten 1. Die Antriebseinheit ist mit einem Elektromotor gekoppelt und wird von diesem angetrieben. Desweiteren umfasst die Magnetkupplung eine Abtriebseinheit mit zweiten Magneten 2. Die Abtriebseinheit ist magnetisch an die Antriebseinheit gekoppelt. Ein Sensor 3 ist dabei so positioniert, dass das aus der Überlagerung des Magnetfeldes der ersten Magneten 1 der Antriebseinheit mit dem Magnetfeld der zweiten Magneten 2 der Abtriebseinheit resultierende Magnetfeld oder dessen zeitliche Ableitung mittels des Sensors 3 erfassbar ist.

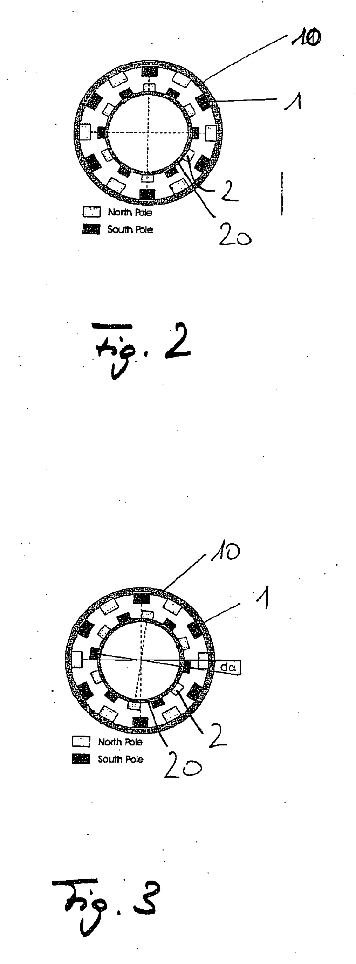

Fig. 2 zeigt einen Schnitt durch die Magnetkupplung mit dem äußeren Ring 10 der Antriebseinheit mit ersten Magneten 1 sowie dem inneren Ring 20 der Abtriebseinheit mit zweiten Magneten 2. In der in Fig. 2 dargestellten Situation ist die Magnetkupplung lastfrei, das heißt das übertragene Drehmoment M ist gleich 0. In diesem Zustand stehen sich jeweils Nord- und Südpol der Magneten 1 des äußeren Rings 10 der Antriebseinheit und 2 des inneren Rings 20 der Abtriebseinheit gegenüber. Im belasteten Zustand der Magnetkupplung gemäß der Darstellung nach Fig. 3, das heißt bei Übertragung eines Drehmomentes an der Magnetkupplung, stellt sich ein Winkelversatz dα ein, wobei der Winkel dα direkt proportional zu dem an der Magnetkupplung übertragenen Drehmoment ist. In diesem Fall stehen sich die Nord- und Südpole der Magneten 1 und 2 nicht mehr exakt gegenüber, sondern weisen eben den genannten Winkelversatz dα auf.

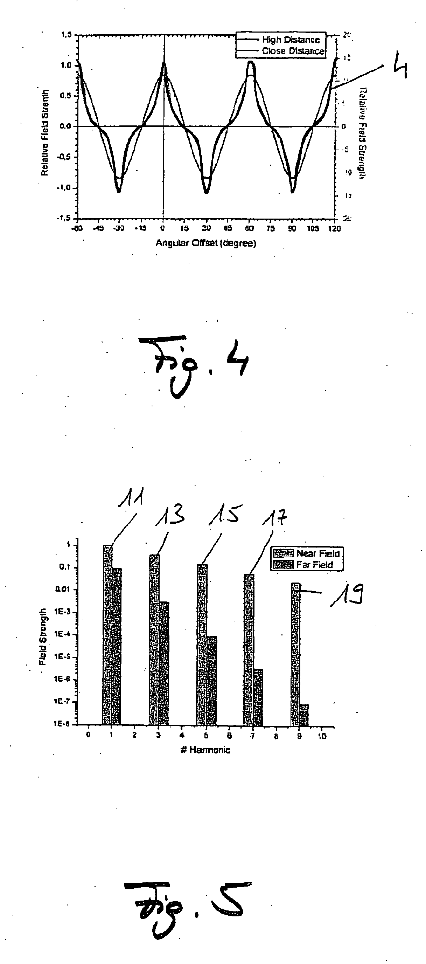

In Fig. 4 dargestellt ist der Verlauf des resultierenden Magnetfeldes aus der Überlagerung des Magnetfeldes der Antriebseinheit mit ersten Magneten 1 und der Abtriebseinheit mit zweiten Magneten 2 im lastfreien Zustand. Im lastfreien Zustand weist das resultierende Magnetfeld, dessen Verlauf 4 in Fig. 4 dargestellt ist, eine Periodizität auf. Mittels einer harmonischen Analyse des periodischen Signalverlaufs 4 nach Fig. 4 lassen sich die Amplituden 11, 13, 15, 17, 19 der Harmonischen des Signals 4 nach Fig. 4 im lastfreien Zustand ermitteln.

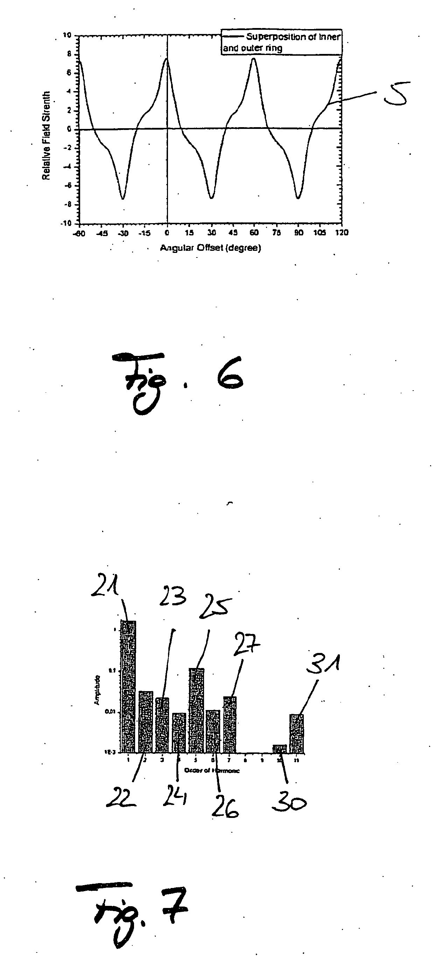

Im belasteten Zustand, das heißt bei Übertragung eines Drehmomentes größer 0 an der Magnetkupplung, erfährt das resultierende Magnetfeld eine Veränderung der Form. Der Verlauf des resultierenden Magnetfeldes infolge des Winkelversatzes dα zwischen dem äußeren Ring 10 der Antriebseinheit und dem inneren Ring 20 der Abtriebseinheit ist in Fig. 6 dargestellt. Aus der veränderten Form 5 des resultierenden Magnetfeldes sind Betriebsgrößen der Magnetkupplung, insbesondere das übertragene Drehmoment, ermittelbar.

Mittels einer harmonischen Analyse des unter Last veränderten resultierenden Magnetfeldes mit dem Signalverlauf 5 lassen sich die Amplituden der im Signal 5 enthaltenen Harmonischen 21, 22, 23, 24, 25, 26, 27, 30, 31 gemäß Fig. 7 ermitteln. Den Spektrogrammen nach Fig. 5 für den lastfreien Zustand bzw. nach Fig. 7 für den belasteten Zustand der Magnetkupplung lässt sich die Änderung der Amplituden verschiedener Harmonischer des Signals 4 im lastfreien Zustand bzw. des Signals 5 im belasteten Zustand entnehmen.

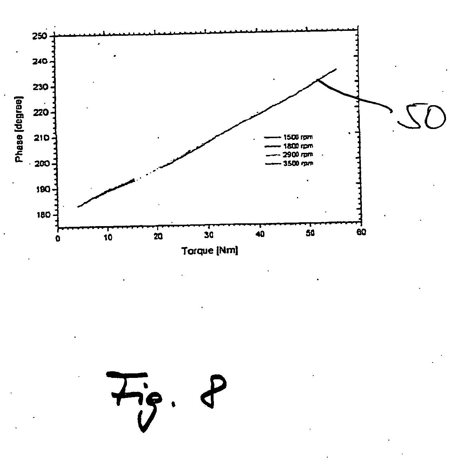

Dabei zeigt sich, dass die Phasenlage bestimmter Harmonischer, insbesondere Harmonischer ungerader Ordnung, eineindeutig abbildbar auf das an der Magnetkupplung übertragene Drehmoment ist. In Fig. 8 dargestellt ist die relative Phasenlage 50 der fünften Harmonischen 15, 25 in Abhängigkeit des an der Magnetkupplung übertragenen Drehmomentes. Dabei zeigt sich ein annähernd linearer Zusammenhang der Phasenlage 50 der fünften Harmonischen 15, 25 mit dem an der Magnetkupplung übertragenen Drehmoment. Mittels einer Formanalyse des mittels eines Sensors gemessenen Magnetfeldes oder dessen zeitlicher Ableitung ist somit die Bestimmung von Betriebsgrößen der Magnetkupplung, insbesondere Bestimmung des Drehmomentes, möglich.

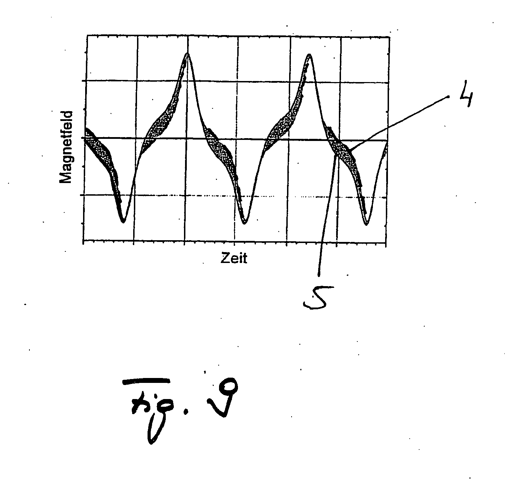

Die Darstellung nach Fig. 9 ist eine überzeichnete Simulation, beim tatsächlichen Signal ist die Verformung viel geringer und mit bloßem Auge nicht zu erkennen. Im unbelasteten Zustand richten sich die Magnetpaare von Innen- und Außenring genau gegenüber an, sodass die gesamte Kupplung symmetrisch (gegenüber Vertauschen der Drehrichtung) ist. Das gemessene Zeitsignal 4 des resultierenden Magnetfeldes im lastfreien Zustand ist somit symmetrisch gegenüber Vertauschung der Zeitrichtung, d. h. im Graphen ist es spiegelsymmetrisch gegenüber Spiegelung an der y-Achse.

Wird die Kupplung belastet, kommt es durch Verwindung von Innen- und Außenring zum Bruch der Symmetrie, was dazu führt, dass im Graphen des Magnetsignals 5 die ansteigende Flanke verformt (nicht mehr symmetrisch) gegenüber der abfallenden Flanke ist.

Der Symmetriebruch führt jedoch dazu, dass in der Fourierzerlegung die Phasen der Harmonischen Komponenten nicht mehr Null sind wie im unbelasteten Symmetriefall. Eine Belastung der Magnetkupplung, d. h. bei Übertragung eines Drehmoments, führt dazu, dass sich die Magnete der Antriebseinheit sowie die Magnete der Abtriebseinheit nicht mehr exakt gegenüberstehen. Dies führt zu einem Symmetriebruch des resultierenden Magnetfeldes mit der Folge einer Verschiebung der Harmonischen Phase von Null in Abhängigkeit der Last, d. h. des übertragenen Drehmomentes.

Mit Hilfe der aus der Harmonischen Analyse gewonnenen relativen Phasenlagen lässt sich also auf das Drehmoment zurück schließen und diese wenn gefordert auch wertmäßig ausgeben.

## Patentansprüche

1. Vorrichtung zur Ermittlung von Betriebsgrößen einer Magnetkupplung, die eine drehbare Antriebseinheit mit ersten Magneten (1) und eine drehbare Abtriebseinheit mit zweiten Magneten (2) aufweist, wobei die Abtriebseinheit magnetisch an die Antriebseinheit gekoppelt ist, und wobei die Vorrichtung lediglich einen Sensor (3) zur Messung eines Magnetfeldes oder dessen zeitlicher Ableitung aufweist, **dadurch gekennzeichnet, dass** der Sensor (3) so positioniert ist, dass das aus der Überlagerung des Magnetfeldes der ersten Magneten (1) der Antriebseinheit mit dem Magnetfeld der zweiten Magneten (2) der Abtriebseinheit resultierende Magnetfeld (4, 5) oder dessen zeitliche Ableitung mittels des Sensors (3) erfassbar ist, und dass eine Auswerteeinheit vorgesehen ist, mittels derer aus dem resultierenden Magnetfeld (4, 5) oder dessen zeitlicher Ableitung das übertragene Drehmoment ermittelbar ist.

2. Vorrichtung nach Anspruch 1, **dadurch gekennzeichnet, dass** die Auswerteeinheit den zeitlichen Verlauf, insbesondere den zeitlichen Verlauf von Zeitabschnitten festlegbarer Länge, des resultierenden Magnetfeldes (4, 5) oder dessen zeitlicher Ableitung einer Fourier-Transformation unterzieht.

3. Vorrichtung nach einem der vorherigen Ansprüche, **dadurch gekennzeichnet, dass** mittels der Auswerteeinheit aus dem zeitlichen Verlauf des resultierenden Magnetfeldes (4, 5) oder dessen zeitlicher Ableitung, insbesondere von Zeitabschnitten festlegbarer Länge, die Amplitude (11, 13, 15, 17, 19, 21, 22, 23, 24, 25, 26, 27, 30, 31) und/oder relative Phasenlage (50) zumindest einer Harmonischen des Verlaufs des resultierenden Magnetfeldes (4, 5) oder dessen zeitlicher Ableitung ermittelbar ist.

4. Vorrichtung nach Anspruch 4, **dadurch gekennzeichnet, dass** mittels der Auswerteeinheit ein Vergleich der Amplitude (11, 13, 15, 17, 19,21,22,23, 24, 25, 26, 27, 30, 31) und/oder relativer Phasenlage (50) zumindest einer Harmonischen des resultierenden Magnetfeldes (4, 5) oder dessen zeitlicher Ableitung, insbesondere einer Harmonischen ungerader Ordnung, mit gespeicherten Werten durchführbar ist.

5. Vorrichtung nach einem der vorherigen Ansprüche, **dadurch gekennzeichnet, dass** es sich bei dem Sensor (3) um einen Hallsensor oder eine Spule handelt.

6. Vorrichtung nach einem der vorherigen Ansprüche, **dadurch gekennzeichnet, dass** eine Speichereinheit vorgesehen ist, mittels derer der zeitliche Verlauf des resultierenden Magnetfeldes (4, 5) oder dessen zeitliche Ableitung, insbesondere von Zeitabschnitten festlegbarer Länge, zumindest temporär speicherbar ist.

7. Vorrichtung nach einem der vorherigen Ansprüche, **dadurch gekennzeichnet, dass** die Anzahl der ersten Magneten (1) der Antriebseinheit der Anzahl der zweiten Magneten (2) der Abtriebseinheit entspricht.

8. Vorrichtung nach einem der vorherigen Ansprüche, **dadurch gekennzeichnet, dass** die Antriebseinheit der Magnetkupplung mit einem Motor, insbesondere einem Elektromotor, gekoppelt ist.

9. Vorrichtung nach einem der vorherigen Ansprüche, **dadurch gekennzeichnet, dass** eine A/D-Wandlereinheit vorgesehen sind, mittels derer ein analoges Sensorsignal insbesondere mit einer festlegbaren Abtastrate digitalisierbar ist.

10. Vorrichtung nach einem der vorherigen Ansprüche, **dadurch gekennzeichnet, dass** eine Filtereinheit vorgesehen sind, mittels derer ein analoges und/oder ein digitalisiertes Sensorsignal filterbar ist, insbesondere tiefpassfilterbar, insbesondere mit einer festlegbaren Filtereckfrequenz.

11. Vorrichtung nach einem der vorherigen Ansprüche, **dadurch**
**gekennzeichnet, dass** der Sensor (3) zwischen der Antriebseinheit mit ersten Magneten (1) und der Abtriebseinheit mit zweiten Magneten (2) oder in oder an einem die Antriebseinheit umschließenden Gehäuses angeordnet ist.

12. Verfahren zur Ermittlung von Betriebsgrößen einer Magnetkupplung, die eine drehbare Antriebseinheit mit ersten Magneten (1) und eine drehbare Abtriebseinheit mit zweiten Magneten (2) aufweist, wobei die Abtriebseinheit magnetisch an die Antriebseinheit gekoppelt ist, insbesondere unter Verwendung einer Vorrichtung nach einem der vorherigen Ansprüche, **gekennzeichnet durch** folgende Schritte:
• Messung des zeitlichen Verlaufs des aus der Überlagerung des Magnetfeldes der ersten Magneten (1) der Antriebseinheit mit dem Magnetfeld der zweiten Magneten (2) der Abtriebseinheit resultierenden Magnetfeldes (4, 5) oder dessen zeitliche Ableitung mittels lediglich eines Sensors (3),
• Ermittlung des übertragenen Drehmomentes aus dem gemessenen, resultierenden Magnetfeld (4, 5) oder dessen zeitlicher Ableitung mittels einer Auswerteeinheit.

13. Verfahren nach Anspruch 12, **dadurch gekennzeichnet, dass** die
Auswerteeinheit den zeitlichen Verlauf, insbesondere den zeitlichen Verlauf von Zeitabschnitten festlegbarer Länge, des resultierenden Magnetfeldes (4, 5) oder dessen zeitlicher Ableitung einer Fourier-Transformation unterzieht.

14. Verfahren nach Anspruch 13, **dadurch gekennzeichnet, dass** die
Zeitabschnitte derart festgelegt sind, dass sie der Dauer einer Umdrehung der Antriebseinheit oder einem ganzzahligen Vielfachen der Dauer einer Umdrehung der Antriebseinheit entsprechen.

15. Verfahren nach einem der Ansprüche 12 bis 14, **dadurch gekennzeichnet,**
**dass** mittels der Auswerteeinheit aus dem zeitlichen Verlauf des resultierenden Magnetfeldes (4, 5) oder dessen zeitlicher Ableitung, insbesondere von Zeitabschnitten festlegbarer Länge, die Amplitude (11, 13, 15, 17, 19, 21, 22, 23, 24, 25, 26, 27, 30, 31) und/oder relative Phasenlage (50) zumindest zweier Harmonischer des resultierenden Magnetfeldes (4, 5) oder dessen zeitlicher Ableitung, insbesondere die Amplitude (11, 13, 15, 17, 19, 21, 22, 23, 24, 25, 26, 27, 30, 31) und/oder relative Phasenlage (50) zweier Harmonischer ungerader Ordnung, ermittelt wird.

16. Verfahren nach Anspruch 15, **dadurch gekennzeichnet, dass** mittels der
Auswerteeinheit ein Vergleich der Amplitude (11, 13, 15, 17, 19, 21, 22, 23, 24, 25, 26, 27, 30, 31) und/oder relativer Phasenlage (50) zumindest einer Harmonischen des resultierenden Magnetfeldes (4, 5) oder dessen zeitlicher Ableitung mit gespeicherten Werten durchgeführt wird, insbesondere einer Harmonischen ungerader Ordnung.

17. Verfahren nach einem der Ansprüche 12 bis 16, **dadurch gekennzeichnet,**
**dass** mittels einer Speichereinheit der zeitliche Verlauf des resultierenden Magnetfeldes (4, 5) oder dessen zeitliche Ableitung, insbesondere von Zeitabschnitten festlegbarer Länge, zumindest temporär gespeichert wird.

18. Verfahren nach einem der Ansprüche 12 bis 17 **dadurch gekennzeichnet,**
**dass** mittels einer A/D-Wandlereinheit das analoge Sensorsignal insbesondere mit einer festlegbaren Abtastrate digitalisiert wird.

19. Verfahren nach einem der Ansprüche 12 bis 18, **dadurch gekennzeichnet,**
**dass** mittels einer Filtereinheit das analoge und/oder digitalisierte Sensorsignal gefiltert wird, insbesondere tiefpaßgefiltert, insbesondere mit einer festlegbaren Filtereckfrequenz.

## Claims

1. Device for determining operating parameters of a magnetic clutch, which has a rotary drive unit with first magnets (1) and a rotary output unit with second magnets (2), in which the output unit is connected magnetically to the drive unit and in which the device has only a sensor (3) for measuring a magnetic field or its time derivative, **characterised in that** the sensor (3) is positioned so that the magnetic field (4, 5) resulting from overlaying the magnetic field of the first magnets (1) of the drive unit with the magnetic field of the second magnets (2) of the output unit or its time derivative may be detected by means of the sensor (3) and that an evaluation unit is provided, by means of which the torque transferred may be determined from the magnetic field (4, 5) resulting or its time derivative.

2. Device according to claim 1, **characterised in that** the evaluation unit subjects the chronological course, particularly the chronological course of intervals of time with a length, which may be determined, of the magnetic field (4, 5) resulting or its time derivative to a Fourier transformation.

3. Device according to one of the previous claims, **characterised in that** by means of the evaluation unit the amplitude (11, 13, 15, 17, 19, 21, 22, 23 24, 25, 26, 27, 30 31) and/or relative phase position (50) at least of one harmonic of the course of the magnetic field (4, 5) resulting or its time derivative may be established from the chronological course of the magnetic field (4, 5) resulting or its time derivative, particularly from intervals of time with a length, which may be determined.

4. Device according to claim 4, **characterised in that** by means of the evaluation unit a comparison of the amplitude (11, 13, 15, 17, 19, 21, 22, 23, 24, 25, 26, 27, 30, 31) and/or relative phase position (50) of at least one harmonic of the magnetic field (4, 5) resulting or its time derivative, particularly a harmonic of the odd order, may be carried out with stored values.

5. Device according to one of the previous claims, **characterised in that** the sensor (3) is an echo sensor or a coil.

6. Device according to one of the previous claims, **characterised in that** a storage unit is provided, by means of which the chronological course of the magnetic field (4, 5) resulting or its time derivative, particularly from intervals of time with a length, which may be determined, may be stored at least temporarily.

7. Device according to one of the previous claims, **characterised in that** the number of first magnets (1) of the drive unit corresponds to the number of second magnets (2) of the output unit.

8. Device according to one of the previous claims, **characterised in that** the drive unit of the magnetic clutch is connected to a motor, particularly an electric motor.

9. Device according to one of the previous claims, **characterised in that** an A/D converter unit is provided, by means of which an analog sensor signal may be digitalised, particularly with a scan rate, which may be determined.

10. Device according to one of the previous claims, **characterised in that** a filter unit is provided, by means of which an analog and/or digitalised sensor signal may be filtered, particularly by a deep pass filter, particularly with a filter cutoff frequency, which may be determined.

11. Device according to one of the previous claims, **characterised in that** the sensor (3) is arranged between the drive unit with first magnets (1) and the output unit with second magnets (2) or in or on a housing surrounding the drive unit.

12. Method for determining operating parameters of a magnetic clutch, which has a rotary drive unit with first magnets (1) and a rotary output unit with second magnets (2), in which the output unit is connected magnetically to the drive unit, particularly by using a device according to one of the previous claims, **characterised by** the following steps:
• Measuring the chronological course of the magnetic field (4, 5) resulting from overlaying the magnetic field of the first magnets (1) of the drive unit with the magnetic field of the second magnets (2) of the output unit or its time derivative by means of only a sensor (3),
• Establishing the torque transferred from the measured magnetic field (4, 5) resulting or its time derivative by means of an evaluation unit.

13. Method according to claim 12, **characterised in that** the evaluation unit subjects the chronological course, particularly the chronological course of intervals of time with a length, which may be determined, of the magnetic field (4, 5) resulting or its time derivative to a Fourier transformation.

14. Method according to claim 13, **characterised in that** the intervals of time are determined in such a way that they correspond to the duration of a rotation of the drive unit or a whole number multiple of the duration of a rotation of the drive unit.

15. Method according to one of claims 12 to 14, **characterised in that** by means of the evaluation unit the amplitude (11, 13, 15, 17, 19, 21, 22, 23, 24, 25, 26, 27, 30, 31) and/or relative phase position (50) of at least two harmonics of the magnetic field (4, 5) resulting or its time derivative, particularly the amplitude (11, 13, 15, 17, 19, 21, 22, 23, 24, 25, 26, 27, 30, 31) and/or relative phase position (50) of two harmonics of the odd order, is established from the chronological course of the magnetic field (4, 5) resulting or its time derivative, particularly from intervals of time with a length, which may be determined.

16. Method according to claim 15, **characterised in that** by means of the evaluation unit a comparison of the amplitude (11, 13, 15, 17, 19, 21, 22, 23, 24, 25, 26, 27, 30, 31) and/or relative phase position (50) of at least one harmonic of the magnetic field (4, 5) resulting or its time derivative may be carried out with stored values, particularly a harmonic of the odd order.

17. Method according to one of claims 12 to 16, **characterised in that** by means of a storage unit the chronological course of the magnetic field (4, 5) resulting or its time derivative, particularly from intervals of time with a length, which may be determined, is stored at least temporarily.

18. Method according to one of claims 12 to 17, **characterised in that** by means of an A/D converter unit the analog sensor signal is digitalised, particularly with a scan rate, which may be determined.

19. Method according to one of claims 12 to 18, **characterised in that** by means of a filter unit the analog and/or digitalised sensor signal is filtered, particularly by a deep pass filter, particularly with a filter cutoff frequency, which may be determined.

## Revendications

1. Dispositif pour la détermination de grandeurs de fonctionnement d'un accouplement magnétique qui présente une unité d'entraînement rotative comprenant de premiers aimants (1) et une unité entraînée rotative comprenant de seconds aimants (2), l'unité entraînée étant couplée magnétiquement à l'unité d'entraînement, et le dispositif présentant uniquement un capteur (3) pour la mesure d'un champ magnétique ou de sa déviation dans le temps, **caractérisé en ce que** le capteur (3) est positionné de sorte que le champ magnétique (4, 5) résultant de la superposition du champ magnétique des premiers aimants (1) de l'unité d'entraînement et du champ magnétique des seconds aimants (2) de l'unité entraînée ou sa déviation dans le temps soit détectable au moyen du capteur (3), et qu'il est prévu une unité d'exploitation au moyen de laquelle le couple transmis est déterminable à partir du champ magnétique résultant (4, 5), ou de sa déviation dans le temps.

2. Dispositif suivant la revendication 1, **caractérisé en ce que** l'unité d'exploitation soumet à une transformation de Fourier l'allure dans le temps, en particulier l'allure dans le temps de périodes de longueur définissable, du champ magnétique résultant (4, 5) ou de sa déviation dans le temps.

3. Dispositif suivant l'une des revendications précédentes, **caractérisé en ce que** l'amplitude (11, 13, 15, 17, 19, 21, 22, 23, 24, 25, 26, 27, 30, 31) et/ou la position de phase relative (50) d'au moins un harmonique de l'allure du champ magnétique résultant (4, 5) ou de sa déviation dans le temps sont déterminables au moyen de l'unité d'exploitation à partir de l'allure dans le temps du champ magnétique résultant (4, 5) ou de sa déviation dans le temps, en particulier de périodes de longueur définissable.

4. Dispositif suivant la revendication 4, **caractérisé en ce qu'**une comparaison de l'amplitude (11, 13, 15, 17, 19, 21, 22, 23, 24, 25, 26, 27, 30, 31) et/ou de la position de phase relative (50) d'au moins un harmonique du champ magnétique résultant (4, 5) ou de sa déviation dans le temps, en particulier d'une harmonique d'ordre impair, avec des valeurs mémorisées est réalisable au moyen de l'unité d'évaluation.

5. Dispositif suivant l'une des revendications précédentes, **caractérisé en ce que** le capteur (3) est un capteur à effet Hall ou une bobine.

6. Dispositif suivant l'une des revendications précédentes, **caractérisé en ce qu'**il est prévu une unité de mémorisation au moyen de laquelle est mémorisable, au moins temporairement, l'allure dans le temps du champ magnétique résultant (4, 5) ou de sa déviation dans le temps, en particulier de périodes de longueur définissable.

7. Dispositif suivant l'une des revendications précédentes, **caractérisé en ce que** le nombre des premiers aimants (1) de l'unité d'entraînement correspond au nombre des seconds aimants (2) de l'unité entraînée.

8. Dispositif suivant l'une des revendications précédentes, **caractérisé en ce que** l'unité d'entraînement de l'accouplement magnétique est couplée à un moteur, en particulier un moteur électrique.

9. Dispositif suivant l'une des revendications précédentes, **caractérisé en ce qu'**il est prévu une unité de conversion analogique - numérique au moyen de laquelle peut être numérisé un signal de capteur analogique, en particulier avec un taux d'échantillonnage définissable.

10. Dispositif suivant l'une des revendications précédentes, **caractérisé en ce qu'**il est prévu une unité de filtrage au moyen de laquelle peut être filtré un signal de capteur analogique et/ou numérisé, notamment passe-bas, en particulier avec une fréquence de coupure définissable.

11. Dispositif suivant l'une des revendication précédentes, **caractérisé en ce que** le capteur (3) est disposé entre l'unité d'entraînement comprenant les premiers aimants (1) et l'unité entraînée comprenant les seconds aimants (2) ou dans ou sur un carter entourant l'unité d'entraînement.

12. Procédé de détermination de paramètres de fonctionnement d'un accouplement magnétique qui présente une unité d'entraînement rotative comprenant de premiers aimants (1) et une unité entraînée rotative comprenant de seconds aimants (2), l'unité entraînée étant couplée magnétiquement à l'unité d'entraînement, en particulier en utilisant un dispositif suivant l'une des revendications précédentes, **caractérisé par** les étapes suivantes :
- mesure de l'allure dans le temps du champ magnétique (4, 5) résultant de la superposition du champ magnétique des premiers aimants (1) de l'unité d'entrainement et du champ magnétique des seconds aimants (2) de l'unité entraînée ou de sa déviation dans le temps au moyen d'uniquement un capteur (3),
- détermination du couple transmis à partir du champ magnétique résultant (4, 5) mesuré ou de sa déviation dans le temps au moyen d'une unité d'exploitation.

13. Procédé suivant la revendication 12, **caractérisé en ce que** l'unité d'exploitation soumet à une transformation de Fourier l'allure dans le temps, en particulier l'allure dans le temps de périodes de longueur définissable, du champ magnétique résultant (4, 5) ou de sa déviation dans le temps.

14. Procédé suivant la revendication 13, **caractérisé en ce que** les périodes sont définies de telle sorte qu'elles correspondent à la durée d'un tour de l'unité d'entraînement ou à un multiple entier de la durée d'un tour de l'unité d'entraînement.

15. Procédé suivant l'une des revendications 12 à 14, **caractérisé en ce que** l'amplitude (11, 13, 15, 17, 19, 21, 22, 23, 24, 25, 26, 27, 30, 31) et/ou la position de phase relative (50) d'au moins deux harmoniques du champ magnétique résultant (4, 5) ou de sa déviation dans le temps, en particulier l'amplitude (11, 13, 15, 17, 19, 21, 22, 23, 24, 25, 26, 27, 30, 31), et/ou la position de phase relative (50) de deux harmoniques d'ordre impair sont déterminées au moyen de l'unité d'exploitation à partir de l'allure dans le temps du champ magnétique résultant (4, 5) ou de sa déviation dans le temps, en particulier de périodes de longueur définissable.

16. Procédé suivant la revendication 15, **caractérisé en ce qu'**une comparaison de l'amplitude (11,13, 15, 17, 19, 21, 22, 23, 24, 25, 26, 27, 30, 31) et/ou de la position de phase relative (50) d'au moins une harmonique du champ magnétique résultant (4, 5) ou de sa déviation dans le temps avec des valeurs mémorisées, en particulier d'un harmonique d'ordre impair, est réalisée au moyen de l'unité d'exploitation.

17. Procédé suivant l'une des revendications 12 à 16, **caractérisé en ce que** l'allure dans le temps du champ magnétique résultant (4, 5) ou de sa déviation dans le temps, en particulier de périodes de longueur définissable, est mémorisée au moins temporairement au moyen d'une unité de mémorisation.

18. Procédé suivant l'une des revendications 12 à 17, **caractérisé en ce que** le signal de capteur analogique est numérisé au moyen d'une unité de conversion analogique -
numérique, en particulier avec un taux d'échantillonnage définissable.

19. Procédé suivant l'une des revendications 12 à 18, **caractérisé en ce que** le signal de capteur analogique et/ou numérisé est filtré au moyen d'une unité de filtrage, notamment passe-bas, en particulier avec une fréquence de coupure définissable.
